(19) **Europäisches Patentamt**
**European Patent Office**
**Office européen des brevets**

(11) **EP 4 653 688 A1**

(12) **EUROPEAN PATENT APPLICATION**
published in accordance with Art. 153(4) EPC

(43) Date of publication:
**26.11.2025 Bulletin 2025/48**

(21) Application number: **23919647.0**

(22) Date of filing: **31.01.2023**

(51) International Patent Classification (IPC):
*F02F 5/00* (2006.01)    *F16J 9/20* (2006.01)

(52) Cooperative Patent Classification (CPC):
**F02F 5/00; F16J 9/20**

(86) International application number:
**PCT/JP2023/003054**

(87) International publication number:
**WO 2024/161504 (08.08.2024 Gazette 2024/32)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Kabushiki Kaisha Riken
Tokyo 102-8202 (JP)**

(72) Inventors:
• **OSHIMI, Keiichi
Kashiwazaki-shi, Niigata 945-8555 (JP)**
• **ISHIKAWA, Masahiro
Kashiwazaki-shi, Niigata 945-8555 (JP)**

(74) Representative: **Arnold & Siedsma
Bezuidenhoutseweg 57
2594 AC The Hague (NL)**

(54) **PISTON RING AND PISTON RING COMBINATION**

(57)    A piston ring to be installed on a piston of an internal combustion engine, including: an inner peripheral surface; an outer peripheral surface; a main body portion including one side surface and another side surface intersecting the inner peripheral surface; and a joint portion formed by a pair of joint end portions facing each other. In a predetermined measurement state, a twist angle of the piston ring has a value with a same sign throughout from one of the joint end portions to the other of the joint end portions along a circumferential direction of the piston ring.

**Fig.4**

**EP 4 653 688 A1**

## Description

## Technical Field

The present disclosure relates to a piston ring and a piston ring combination.

## Background Art

Conventionally, in internal combustion engines, techniques for reducing the number of emitted particulates have been known (for example, Patent Literature 1).

## Citation List

## Patent Literature

Patent Literature 1: Japanese Unexamined Patent Publication No. 2020-204287

## Summary of Invention

## Technical Problem

In recent years, in gasoline engines for automobiles and the like, for example, direct in-cylinder fuel injection systems have become increasingly widespread. Internal combustion engines with direct in-cylinder fuel injection tend to have a higher particle number (PN) of emitted particulate matter compared to port injection type internal combustion engines. On the other hand, stricter regulations on exhaust gas containing particulate matter are being implemented in various countries. While it is possible for automobile manufacturers to address these stricter regulations by, for example, installing a gasoline particulate filter (GPF) in vehicles to collect and purify particulate matter, this leads to increased costs, and therefore further reduction of particulate matter generated in internal combustion engines is desired.

An object of the present disclosure is to provide a piston ring and a piston ring combination that can effectively suppress the generation of particulate matter.

## Solution to Problem

In order to solve the above problem, the inventors have conducted intensive studies. As a result, the inventors have found that the side sealing performance of a piston ring can deteriorate in a certain circumferential section across a location where the twist angle becomes 0'. Therefore, it was discovered that by configuring the piston ring to improve the side sealing performance, the generation of particulate matter can be effectively suppressed.

A piston ring according to one aspect of the present disclosure is a piston ring to be installed on a piston of an internal combustion engine, including: a main body portion including an inner peripheral surface, an outer peripheral surface, and one side surface and another side surface intersecting the inner peripheral surface; and a joint portion formed by a pair of joint end portions facing each other. In a predetermined measurement state, a twist angle of the piston ring has a value with a same sign throughout from one of the joint end portions to the other of the joint end portions along a circumferential direction of the piston ring.

In the piston ring according to one aspect of the present disclosure, the twist angle of the piston ring has a value of the same sign throughout from one of the joint end portions to the other of the joint end portions along the circumferential direction of the piston ring. This suppresses deterioration of the side sealing performance in a certain circumferential section of the piston ring across a location where the twist angle becomes 0'. The side sealing performance can be improved throughout the entire circumference of the piston ring. As a result, the intrusion of lubricating oil and unburned hydrocarbons into the combustion chamber is suppressed, making it possible to effectively suppress the generation of particulate matter.

In one embodiment, the twist angle may be equal to or greater than -50' and less than 0', or the twist angle is greater than 0' and equal to or less than 50'.

In one embodiment, the outer peripheral surface may include a taper surface having a cross-sectional shape that protrudes radially outward as it extends toward a bottom dead center of the piston, and the piston ring may include, at a side of the bottom dead center, a first notch portion provided between the another side surface of the piston ring and the taper surface, and a second notch portion provided between the another side surface of the piston ring and the inner peripheral surface of the piston ring.

In one embodiment, the piston ring may be a second ring.

A piston ring combination according to another aspect of the present disclosure is a piston ring combination including: the second ring that is the above-described piston ring; and a top ring to be installed on the piston. The top ring includes a main body portion including an inner peripheral surface, an outer peripheral surface, and, one side surface and another side surface intersecting the inner peripheral surface, and a joint portion. The main body portion of the top ring forms an annular shape having a predetermined nominal diameter as a diameter. A ratio $S1/d1$ of a joint gap $S1$ of the joint portion of the top ring to the nominal diameter $d1$ is 0.003 or less.

According to the piston ring combination according to another aspect of the present disclosure, the second ring that is the above-described piston ring can improve the side sealing performance throughout the entire circumference of the second ring. Furthermore, by narrowing the joint gap of the top ring, it is possible to suppress the intrusion of lubricating oil and unburned hydrocarbons existing between the top ring and the second ring into the combustion chamber through the joint gap of the top ring. As a result, not only are the lubricating oil and unburned hydrocarbons existing between the top ring and the second ring reduced, but also the lubricating oil and unburned hydrocarbons intruding into the combustion chamber through the joint gap of the top ring are reduced. Due to such synergistic effects, it becomes possible to suppress the generation of particulate matter even more effectively.

**Advantageous Effects of Invention**

According to the piston ring and the piston ring combination according to various aspects of the present disclosure, it becomes possible to effectively suppress the generation of particulate matter.

**Brief Description of Drawings**

FIG. 1 is a schematic cross-sectional view illustrating a piston ring combination according to one embodiment.
(a) of FIG. 2 is a plan view of a top ring of FIG. 1.
(b) of FIG. 2 is a cross-sectional view taken along line IIb-IIb of (a) of FIG. 2.
(a) of FIG. 3 is a plan view of a second ring of FIG. 1.
(b) of FIG. 3 is a cross-sectional view taken along line IIIb-IIIb of (a) of FIG. 3.
FIG. 4 is a cross-sectional view illustrating an example of the posture of the second ring in a ring groove.
FIG. 5 is a graph illustrating the relationship between the measurement angle position and the twist angle in the second ring.
FIG. 6 is a cross-sectional view for explaining a method of measuring the twist angle.
(a) of FIG. 7 is a graph illustrating the relationship between the specifications of the top ring and the second ring and the ratio of PN.
(b) of FIG. 7 is a graph illustrating the relationship between other specifications of the top ring and the second ring and the ratio of PN.
FIG. 8 is a cross-sectional view of a top ring according to a modified example.
FIG. 9 is a cross-sectional view illustrating an example of the posture of a second ring in a ring groove according to a modified example.
FIG. 10 is a cross-sectional view illustrating an example of the posture of a second ring in a ring groove according to another modified example.

**Description of Embodiments**

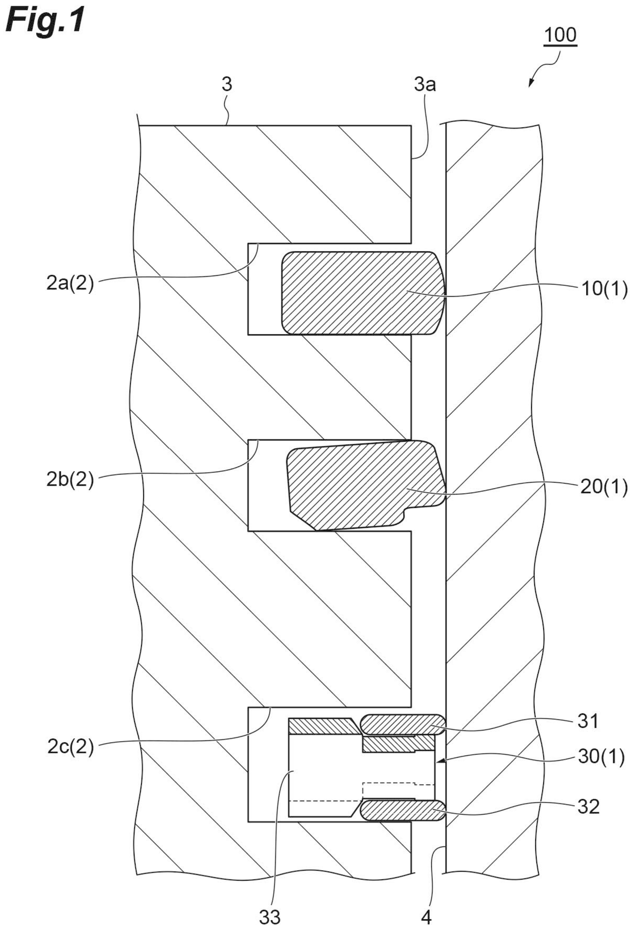

Hereinafter, examples of the present disclosure will be described with reference to the drawings. In the following description, the same reference numerals are used for the same or corresponding elements, and redundant description is omitted. In the following description, the "upper side" corresponds to a side of the top dead center of the piston (a side of the engine combustion chamber), and the "lower side" corresponds to a side of the bottom dead center of the piston (a side of the engine crank chamber). In FIGS. 1, 4, 9, and 10, the posture of the second ring in the ring groove is exaggerated for explanation. The twist angle of the second ring in FIGS. 1, 4, 9, and 10 is depicted as being apparently greater (more twisted) than the twist angle of the second ring described below.

A piston ring combination 100 according to the present disclosure is a combination of a plurality of piston rings 1 to be installed on a piston of an internal combustion engine. The internal combustion engine is, for example, a gasoline engine with direct in-cylinder fuel injection mounted on an automobile. In the internal combustion engine, particulate matter may be generated during combustion. The particulate matter includes particulate matter derived from fuel and particulate matter derived from lubricating oil. In gasoline engines, particulate matter derived from fuel (unburned hydrocarbons) tends to be more than that derived from lubricating oil. In the piston ring and piston ring combination according to the present disclosure, reduction of PN is achieved by reducing the intrusion of lubricating oil and unburned hydrocarbons into the combustion chamber.

FIG. 1 is a schematic cross-sectional view illustrating a piston ring combination according to one embodiment. The cross-sectional view of FIG. 1 is a cross-sectional view along the axial direction of a plurality of piston rings 1. In FIG. 1, the piston rings 1 are each installed in a ring groove 2, and a piston 3 is disposed in a cylinder. The axial direction of the piston ring 1 is the same as the reciprocating direction of the piston 3.

As shown in FIG. 1, a plurality of ring grooves 2 are formed on a piston outer peripheral surface 3a of the piston 3. The plurality of ring grooves 2, in order from the upper side, are a top ring groove 2a, a second ring groove 2b, and an oil ring groove 2c. A plurality of piston rings 1 are assembled into the plurality of ring grooves 2, respectively.

The plurality of piston rings 1 include a top ring 10 fitted into the top ring groove 2a, and a second ring 20 fitted into the second ring groove 2b. The plurality of piston rings 1 may include an oil ring 30 fitted into the oil ring groove 2c. Each piston ring 1 can provide a gas sealing function between the combustion chamber and the crank chamber by sliding against the inner peripheral surface 4 of the cylinder, a function of scraping off lubricating oil adhering to the inner peripheral surface 4 of the cylinder, and a function of forming an oil film of lubricating oil, etc. The inner peripheral surface 4 of the cylinder refers to the inner wall surface of the cylinder bore.

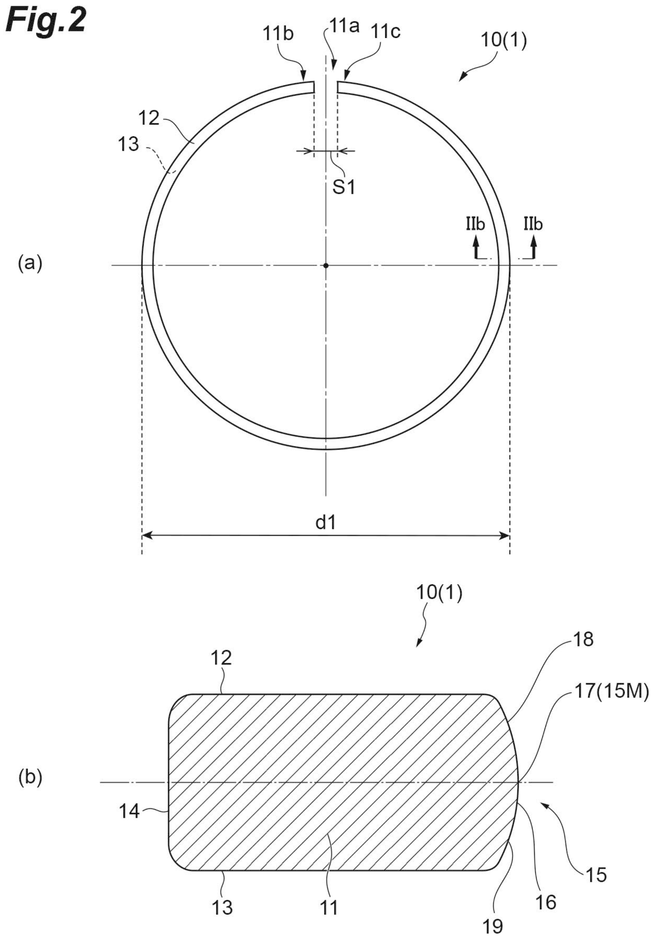

[Top Ring] (a) of FIG. 2 is a plan view of the top ring of FIG. 1. (b) of FIG. 2 is a cross-sectional view taken along line IIb-IIb of (a) of FIG. 2. As shown in FIGS. 1, (a) and (b) of 2, the top ring 10 includes an annular main body portion 11 and a joint portion 11a formed in a part of the main body portion 11. The main body portion 11 includes a pair of side surfaces (one side surface) 12 and side surface (another side surface) 13, an inner peripheral surface 14, and an outer peripheral surface 15. The side surfaces 12 and 13 intersect the inner peripheral surface 14. The side surfaces 12 and 13 are, for example, substantially orthogonal to the inner peripheral surface 14. In the following description, the direction connecting the side surface 12 and the side surface 13 is defined as the width direction of the top ring 10, and the direction connecting the inner peripheral surface 14 and the outer peripheral surface 15 is defined as the thickness direction of the top ring 10. The width direction of the top ring 10 corresponds to the "vertical direction" and "axial direction." These directions are the same for the second ring 20.

The main body portion 11 has a substantially rectangular cross-sectional shape in which the thickness direction is the long side and the width direction is the short side. The main body portion 11 is formed, for example, using cast iron or steel containing a plurality of metal elements, with sufficient strength, heat resistance, and elasticity.

A surface modification may be applied to the surface of the main body portion 11 to form a hard coating. The hard coating is, for example, a physical vapor deposition film (PVD film) formed by a physical vapor deposition method (PVD method). This allows the hard coating to be formed with sufficient hardness. The hard coating is an ion plating film containing at least one of titanium (Ti) and chromium (Cr), and at least one of carbon (C), nitrogen (N), and oxygen, or a diamond-like carbon (DLC) film. Specific examples of the hard coating include a titanium nitride film, a chromium nitride film, a titanium carbonitride film, a chromium carbonitride film, a chromium oxynitride film, a chromium film, or a titanium film. Among these, when wear resistance and scuffing resistance are emphasized, a chromium nitride film may be used. The hard coating may be a laminate, and may include, for example, a chromium nitride film and a diamond-like carbon film.

The joint portion 11a is a portion where a part of the main body portion 11 is divided, and is formed by a pair of joint end portions 11b and 11c facing each other. The pair of joint end portions 11b and 11c are portions that are free ends of the main body portion 11, respectively. The gap (joint gap S1) of the joint portion 11a is set, for example, so as not to contact when the top ring 10 is heated and thermally expanded. The joint portion 11a functions as a relief portion for thermal expansion of the main body portion 11 due to a temperature difference between the top ring 10 and the inner peripheral surface 4 of the cylinder during use of the top ring 10. The joint shape of the joint portion 11a is not particularly limited, and may be, for example, a straight joint.

The width of the main body portion 11 is, for example, 0.6 mm or greater and 5.0 mm or less. The thickness of the main body portion 11 is, for example, 1.4 mm or greater and 7.7 mm or less. The nominal diameter $d1$ of the main body portion 11 is, for example, 32.0 mm or greater and 190.0 mm or less. That is, the main body portion 11 of the top ring 10 forms an annular shape having a predetermined nominal diameter $d1$ as a diameter. The ratio $S1/d1$ of the joint gap $S1$ of the joint portion 11a of the top ring 10 to the nominal diameter $d1$ is 0.003 or less. The ratio $S1/d1$ of the joint gap $S1$ to the nominal diameter $d1$ may be greater than 0.001 and 0.003 or less. The ratio $S1/d1$ of the joint gap $S1$ to the nominal diameter $d1$ may be greater than 0.001 and 0.0025 or less, and may be greater than 0.001 and 0.0020 or less. Each dimension of the main body portion 11 can be measured using a contact-type or non-contact-type measuring device.

In general top rings, the ratio of the joint gap to the nominal diameter is often set to be greater than 0.003. In contrast, in the top ring 10, the ratio $S1/d1$ of the joint gap $S1$ to the nominal diameter $d1$ is 0.003 or less, so that the joint gap $S1$ is narrower than that of a general top ring. As a result, the amount of lubricating oil and unburned hydrocarbons passing through the joint gap $S1$ is reduced.

Unless otherwise specified, the shape of the line regarding the outer peripheral surface of each piston ring 1 in the following description means the shape of the line in a cross-sectional view of the piston ring 1.

On the outer peripheral surface 15 of the top ring 10, as an example, a curved surface 16 having a cross-sectional shape that curves convexly outward in the radial direction is provided. The curved surface 16 is, for example, an arcuate surface having both ends at the radially outer end of the side surface 12 and the radially outer end of the side surface 13. A chamfered portion may be formed between the upper end of the curved surface 16 and the side surface 12. A chamfered portion may be formed between the lower end of the curved surface 16 and the side surface 13. The vertex 17, which is the radially outermost point of the curved surface 16 of the top ring 10, is disposed at the central portion 15M of the outer peripheral surface 15 of the top ring 10 in the width direction (axial direction). The vertex 17 is the portion of the outer peripheral surface 15 that protrudes the most outward in the radial direction and is the point that becomes the sliding contact portion with the inner peripheral surface 4 of the cylinder. The vertex 17 extends in the circumferential direction over the entire circumference of the main body portion 11, forming an annular shape. The outer peripheral surface 15 of the top ring 10 has a symmetrical barrel shape that is symmetrical in the width direction with the vertex 17 as a boundary.

A barrel shape is a curved surface that curves convexly outward in the radial direction of the piston ring 1 and means a curved surface including the radially outermost part of the piston ring 1. The barrel shape includes a symmetrical barrel shape and an eccentric barrel shape. The symmetrical barrel shape is a barrel shape in which the radially outermost part (vertex) of the piston ring 1 is located at the center in the width direction of the outer peripheral surface of the piston ring 1. The eccentric barrel shape is a barrel shape in which the radially outermost part (vertex) of the piston ring 1 is located above (closer to the combustion chamber) or below (closer to the crank chamber) the center in the width direction of the outer peripheral surface of the piston ring 1. In the eccentric barrel shape of the top ring 10, the vertex 17 is located below the center in the width direction of the outer peripheral surface of the piston ring 1.

The size of the arcuate surface of the curved surface 16 can be defined by the amount of drop (drop dimension) in the radial direction of the top ring 10 between a point on the curved surface 16 at a certain distance in the width direction from the vertex 17 and the position of the vertex 17. The point on the curved surface 16 at a certain distance in the width direction from the vertex 17 may be, for example, a first point at a distance of 0.2 mm or greater and 1.8 mm or less from the vertex 17 toward the side of the top dead center of the piston, and a second point at a distance of 0.2 mm or greater and 1.8 mm or less from the vertex 17 toward the side of the bottom dead center of the piston. The amount of drop of the curved surface 16 at the first point above the vertex 17 may be, for example, 2 $\mu$m or greater and 10 $\mu$m or less. The amount of drop of the curved surface 16 at the second point below the vertex 17 may be, for example, 2 $\mu$m or greater and 10 $\mu$m or less. When the outer peripheral surface 15 of the top ring 10 is a symmetrical barrel shape, the amount of drop of the curved surface 16 at each of the first point above the vertex 17 and the second point below the vertex 17 may be 2 $\mu$m or greater and 6 $\mu$m or less. That is, the curved surface 16 of the top ring 10 is an arcuate surface passing through a first point 18 located at a distance of 0.2 mm or greater and 1.8 mm or less from the vertex 17 toward the top dead center side of the piston 3 and at a drop of 2 $\mu$m or greater and 10 $\mu$m or less on the radially inner side, and a second point 19 located at a distance of 0.2 mm or greater and 1.8 mm or less from the vertex 17 toward the bottom dead center side of the piston 3 and at a drop of 2 $\mu$m or greater and 10 $\mu$m or less on the radially inner side.

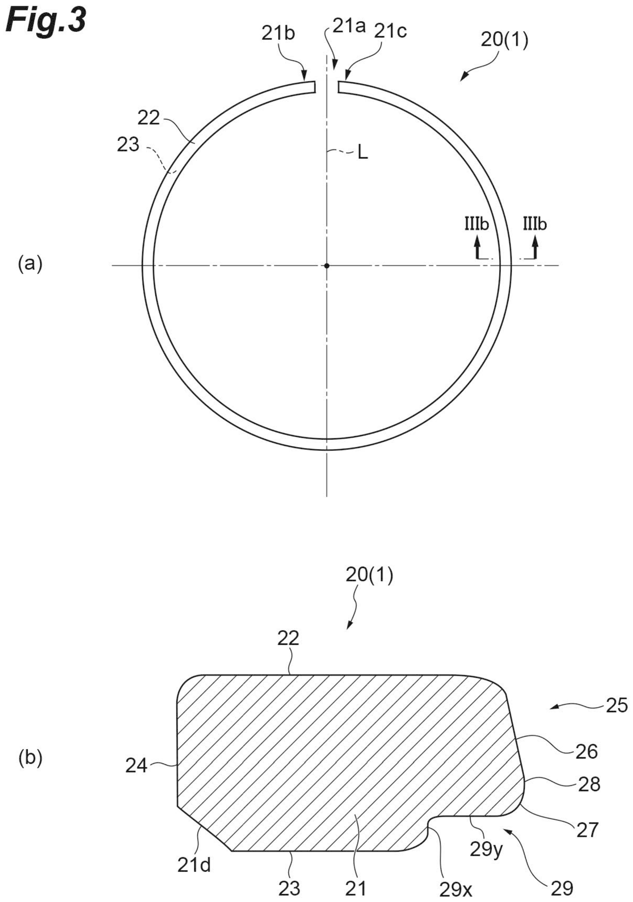

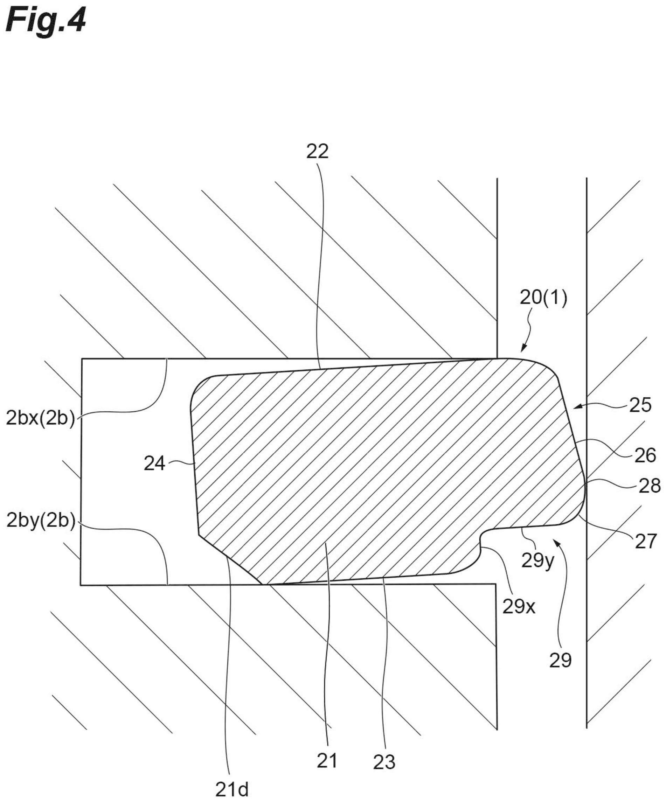

[Second Ring] (a) of FIG. 3 is a plan view of the second ring of FIG. 1. (b) of FIG. 3 is a cross-sectional view taken along line IIIb-IIIb of (a) of FIG. 3. FIG. 4 is a cross-sectional view illustrating an example of the posture of the second ring in a ring groove. As shown in FIGS. 1, (a) of 3, (b) of 3, and 4, the second ring 20 includes an annular main body portion 21 and a joint portion 21a formed in a part of the main body portion 21. The main body portion 21 includes a pair of side surfaces (one side surface) 22 and side surface (another side surface) 23, an inner peripheral surface 24, and an outer peripheral surface 25. The side surfaces 22 and 23 intersect the inner peripheral surface 24. The side surfaces 22 and 23 are, for example, substantially orthogonal to the inner peripheral surface 24.

The main body portion 21 has a substantially rectangular cross-sectional shape in which the thickness direction is the long side and the width direction is the short side. The main body portion 21 is formed, for example, using cast iron or steel containing a plurality of metal elements, with sufficient strength, heat resistance, and elasticity. A surface modification may be applied to the surface of the main body portion 21 to form a hard coating, as in the main body portion 11 of the top ring 10 described above. The width of the main body portion 21 is, for example, 0.6 mm or greater and 5.0 mm or less. The thickness of the main body portion 21 is, for example, 1.4 mm or greater and 7.7 mm or less. The width of the main body portion 21 may be the same as the width of the main body portion 11. The thickness of the main body portion 21 may be the same as the thickness of the main body portion 11. The dimensions of the main body portion 11 and the main body portion 21 are not limited to the above examples.

The joint portion 21a is a portion where a part of the main body portion 21 is divided. The joint portion 21a is formed by a pair of joint end portions 21b and 21c facing each other, as in the joint portion 11a. The joint shape of the joint portion 21a is not particularly limited, and may be, for example, a straight joint.

The outer peripheral surface 25 of the second ring 20 includes, as an example, a taper surface 26. The taper surface 26 is an inclined surface having a cross-sectional shape that protrudes radially outward as it extends toward the lower side of the second ring 20. The taper surface 26 is inclined at a predetermined taper angle with respect to the width direction. The predetermined taper angle may be, for example, 1° or greater and 5° or less.

A chamfered portion 26a is formed at the upper end of the taper surface 26, continuous with the radially outer end of the side surface 22. At the lower end of the taper surface 26, a notch portion (first notch portion) 29 is formed. The notch portion 29 is provided between the side surface 23 and the taper surface 26, and is a portion from which the corner portion where the side surface 23 and the taper surface 26 virtually intersect is cut away.

The notch portion 29 extends over the entire circumference of the main body portion 21. The notch portion 29 is formed, for example, by notching a part of the main body portion 21 on a side of the side surface 23 and a side of the outer peripheral surface 25 over the entire circumference using a jig for cutting, grinding, or polishing. The notch portion 29 may be formed by plastically processing the above part of the main body portion 21 by rolling or drawing or the like. The notch portion 29 includes a first surface 29x facing the outer peripheral surface 25 and a second surface 29y facing the side surface 23. As an example, the first surface 29x extends substantially parallel to the inner peripheral surface 24, and the second surface 29y extends substantially parallel to the side surfaces 22 and 23. Therefore, the angle formed by the first surface 29x and the second surface 29y is substantially a right angle.

The taper surface 26 extends, for example, so as to linearly connect the radially outer end of the side surface 22 and the radially outer end of the second surface 29y. At the lower end of the taper surface 26, a lower end drop portion 27, which is an arcuate surface continuous with the radially outer end of the second surface 29y, is formed. The boundary between the linear portion of the taper surface 26 and the lower end drop portion 27 is the outermost vertex 28 of the outer peripheral surface 25 in the radial direction of the second ring 20. The vertex 28 is the portion of the outer peripheral surface 25 that protrudes the most outward in the radial direction. The vertex 28 extends in the circumferential direction over the entire circumference of the main body portion 21, forming an annular shape. The vertex 28 is located at the side of the bottom dead center of the center between the side surface 22 and the side surface 23 in the width direction. The sliding contact portion between the second ring 20 and the inner peripheral surface 4 of the cylinder is a location shifted above or below the vertex 28 depending on the twist of the second ring 20.

The size of the arcuate surface of the lower end drop portion 27 can be defined by the amount of wrap drop (drop dimension) in the radial direction of the second ring 20 between the position of the vertex 28 and the position of a point where a virtual straight line parallel to the width direction and at a certain distance (for example, 48 mm) radially inward from the vertex 28 intersects the lower end drop portion 27. The wrap drop amount may be, for example, 2 μm or less. The wrap drop amount may be greater than 0 μm and 1 μm or less.

The main body portion 21 of the second ring 20 includes a balance cut surface (second notch portion) 21d that extends inclined with respect to the width direction so as to connect the side surface 23 and the inner peripheral surface 24. The balance cut surface 21d is provided between the side surface 23 and the inner peripheral surface 24, and is a portion from which the corner portion where the side surface 23 and the inner peripheral surface 24 virtually intersect is cut away. The balance cut surface 21d extends over the entire circumference of the main body portion 21. The second ring 20 has a so-called balance scraper cut shape. The twist angle of the second ring 20 will be described in detail later.

[Oil Ring] As shown in FIG. 1, the oil ring 30 is, for example, a three-piece oil control ring. The oil ring 30 may include a pair of side rails 31 and 32 that slidablly contact the inner peripheral surface 4 of the cylinder, and a spacer expander 33 disposed between the pair of side rails 31 and 32. The outer peripheral surface shape of the oil ring 30 may be a taper, a symmetrical barrel shape, or an eccentric barrel shape. As the oil ring 30, a known oil ring configuration can be used. The oil ring 30 may be, for example, a two-piece oil control ring.

[Twist Angle of Second Ring] The twist angle of the second ring 20 in a predetermined measurement state has a value with a same sign throughout from one of the joint end portions 21b and 21c to the other along the circumferential direction of the second ring 20. Having a value with a same sign throughout means that the twist angle is positive throughout, or negative throughout. As shown in FIG. 4, a positive twist means a twist in which the outer peripheral surface 25 is displaced upward with respect to the inner peripheral surface 24. A negative twist means a twist in which the outer peripheral surface 25 is displaced downward with respect to the inner peripheral surface 24, opposite to the example of FIG. 4.

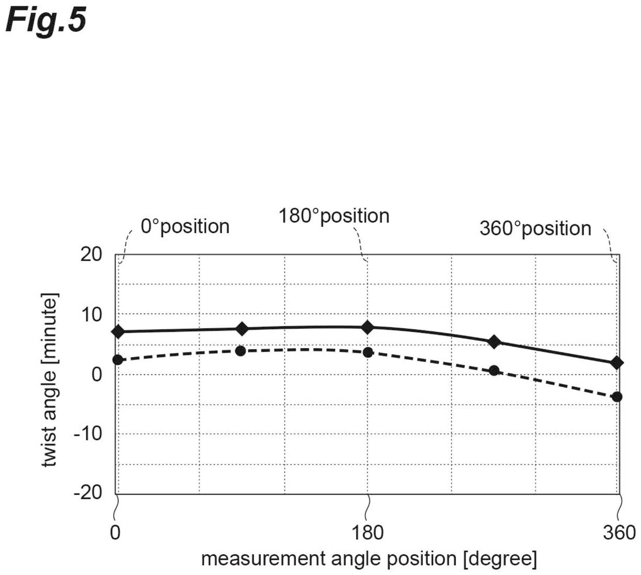

FIG. 5 is a graph illustrating the relationship between the measurement angle position and the twist angle in the second ring. In FIG. 5, the twist angle of the second ring 20 according to the embodiment (Example) is shown by black square plots and a solid line, and the twist angle of the second ring according to the comparative example is shown by black circle plots and a dashed line. The horizontal axis of FIG. 5 is the measurement angle position, and the vertical axis is the twist angle. The measurement angle position is a position expressed as an angle along the circumferential direction of the second ring 20 where the twist angle is measured. In the plan view of FIG. 3, the measurement angle position is expressed as a counterclockwise angle along the circumferential direction of the second ring 20, with the center position of the joint portion 21a in the circumferential direction as 0°. The center position of the joint portion 21a in the circumferential direction corresponds to the position on the one-dot chain line L in FIG. 3 at the joint portion 21a. The measurement angle position may be expressed as a clockwise angle along the circumferential direction of the second ring 20, with the center position of the joint portion 21a in the circumferential direction as 0°. Generally, in quality control of piston rings, the twist angle is often defined by the twist angle at the 180° measurement angle position. The twist angle of the second ring 20 according to the embodiment is also defined at the measurement angle positions of 0°, 90°, 270°, and 360°. Here, in the explanation of the measurement angle position, the "0° position" means a position that is 1 mm away from the joint end 21b along the circumference in the counterclockwise direction when expressed as a counterclockwise angle. In this case, the "360° position" means a position that is 1 mm away from the joint end 21c along the circumference in the clockwise direction. Also, in the explanation of the measurement angle position, the "0° position" means a position that is 1 mm away from the joint end portion 21c along the circumference in the clockwise direction when expressed as a clockwise angle. In this case, the "360° position" means a position that is 1 mm away from the joint end portion 21b along the circumference in the counterclockwise direction. That is, since the twist angle cannot be measured in the space portion of the joint portion 21a (the center position in the circumferential direction of the joint portion 21a), for convenience, "0° position" and "360° position" where the twist angle can be measured are set for the horizontal axis of FIG. 5, and the twist angle is measured. For measurement angle positions other than 0° and 360° on the horizontal axis of FIG. 5, the numerical value on the horizontal axis of FIG. 5 matches the actual position (for example, the "180° position" is 180° on the horizontal axis of FIG. 5, and the numerical value matches the actual position).

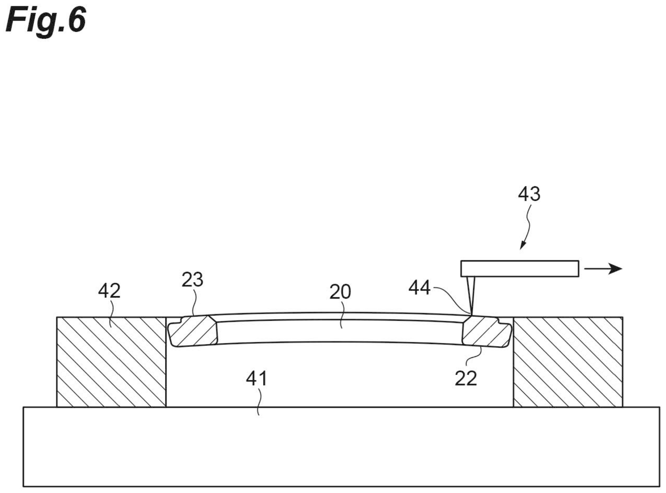

The method of measuring the twist angle in a predetermined measurement state will be described. FIG. 6 is a cross-sectional view for explaining a method of measuring the twist angle. The measurement of the twist angle can be performed by a method conforming to the JIS (Japanese Industrial Standards) twist inspection method (B8032-2 3.2.18). Specifically, as shown in FIG. 6, a measurement leveling adjustment table 41, a ring gauge 42, a measuring instrument 43, and chart paper are prepared. The inclination of the upper surface of the measurement leveling adjustment table 41 is adjustable. The inner diameter of the ring gauge 42 is a size equal to the nominal diameter of the second ring 20. The chart paper and the ring gauge 42 are placed on the upper surface of the measurement leveling adjustment table 41. The measurement leveling adjustment table 41 is adjusted so that the upper surface of the ring gauge 42 is horizontal. The second ring 20 is fitted into the ring gauge 42 so that the side surface 23, which is the lower surface, is on the upper side. In the second ring 20 fitted into the ring gauge 42, the joint end portions 21b and 21c are in a state of being close to each other. The side surface 22, which is the upper surface side, is in a state of being floated above the upper surface of the measurement leveling adjustment table 41, so that both side surfaces 22 and 23 are not constrained. The radially outer end of the side surface 23 is arranged so as to be flush with the upper surface of the ring gauge 42 over the entire circumference of the second ring 20.

In this state, the stylus 44 of the measuring instrument 43 is brought into contact with the flat portion of the side surface 23, and the flat portion is measured in the radial direction from the inner peripheral surface to the outer peripheral surface. As the stylus 44, for example, a spherical stylus with a tip of 250 $\mu$mR or 800 $\mu$mR and a radius of 1.5 mm (tolerance 0.005 mm) can be used. In this way, the surface shape of the side surface 23 is measured and recorded on the chart paper. The measurement magnification may be, for example, 1000 times or 2000 times in the vertical direction, and 50 times or 100 times in the horizontal direction. The measurement magnification may be selected within a range that is easy to read on the chart paper according to the amount of the twist angle. Such measurement is performed at each of the measurement angle positions of 0°, 90°, 180°, 270°, and 360°. The surface shape corresponds to the relative position (for example, in mm) of the surface of the side surface 23 with respect to the upper surface of the ring gauge 42 as a reference surface. The twist angle can be calculated as the angle between the upper surface of the ring gauge 42 and the side surface 23 using the relative position and the measurement length, as shown in the following equation (1):

$$\text{Twist angle} = (180/\pi) \times \tan^{-1}(b/a) \ ... \ (1)$$

where a is the movement distance of the stylus 44 along the radial direction (the reference surface) of the second ring 20, and b is the movement distance of the stylus 44 along the width direction (the direction perpendicular to the reference surface) of the second ring 20. That is, when a right triangle is assumed in cross-sectional view with the flat portion of the side surface 23 as the hypotenuse, the lengths of the two sides forming the right angle correspond to a and b.

The twist angle of the second ring 20 measured in this way is greater than 0' and equal to or less than 50'. If it is greater than 50', the side sealing performance deteriorates. The twist angle of the second ring 20 may be greater than 0' and equal to or less than 35'. The twist angle of the second ring 20 may be greater than 0' and equal to or less than 20'. As an example, as shown in FIG. 5, the twist angle of the second ring 20 is greater than 0' and less than 10'. The twist angle of the second ring 20 may be 5' or greater at one or both of the 0° position and the 360° position (here, the 0° position) of the second ring 20. The twist angle of the second ring 20 may be 1' or greater and less than 10' at each of the 90° position, 180° position, and 270° position when the position opposite to the joint portion 21a in the circumferential direction of the second ring 20 is defined as the 180° position. The twist angle may be 5' or greater and less than 10' at each of the 90° position, 180° position, and 270° position. The difference between the upper limit value (here, the value at the 180° position) and the lower limit value (here, the value at the 360° position) of the twist angle of the second ring 20 is less than 25'. The difference between the upper limit value and the lower limit value of the twist angle of the second ring 20 may be less than 10'. The twist angle of the second ring 20 may have the maximum absolute value at a position other than the 0° position and the 360° position. In the example of FIG. 5, the twist angle of the second ring 20 has the maximum absolute value at the 180° position.

In such a second ring 20, since the twist angle of the second ring 20 is a positive twist angle throughout from one of the joint end portions 21b and 21c to the other along the circumferential direction of the second ring 20, the posture is inclined so that the outer peripheral surface 25 is displaced upward with respect to the inner peripheral surface 24 in the second ring groove 2b. As shown in FIG. 4, the side surface 22 of the second ring 20 contacts the upper side surface 2bx of the second ring groove 2b. The side surface 23 of the second ring 20 contacts the lower side surface 2by of the second ring groove 2b. The space between the piston outer peripheral surface 3a and the inner peripheral surface 4 of the cylinder is separated into an upper space 3b and a lower space 3c via the contact portions between the side surfaces of the second ring 20 and the second ring groove 2b. As a result, the sealing performance (side sealing performance) for suppressing the passage of lubricating oil from the lower space 3c to the upper space 3b through the second ring groove 2b is improved. In addition, the space 3d up to the contact portion between the side surface 23 of the second ring 20 and the lower side surface 2by of the second ring groove 2b also functions as an oil reservoir for the lubricating oil in the lower space 3c. The pressure increase of the lubricating oil in the lower space 3c can be suppressed, and the passage of lubricating oil through the second ring groove 2b can be further suppressed.

On the other hand, the twist angle of the second ring according to the comparative example in FIG. 5 is greater than 0' at one of the joint end portions and less than 0' at the other joint end portion. The twist angle of the second ring according to the comparative example has a value of different signs at one and the other of the joint end portions. Therefore, the twist angle of the second ring according to the comparative example becomes 0' at a certain position along the circumferential direction (in the example of FIG. 5, at about the 285° position). In such a second ring according to the comparative example, the side sealing performance decreases at the angle position where the twist angle becomes 0'. The decrease in side sealing performance means that lubricating oil passes from the lower space 3c to the upper space 3b through the second ring groove 2b via a gap that occurs when the second ring 20 and the second ring groove 2b are not in contact with each other at the side surfaces.

The inventors, in contrast to the conventional design philosophy of the second ring according to the comparative example, which attempts to make the twist angle as close to 0' as possible on average, have adopted a reverse approach of intentionally providing a predetermined twist angle, thereby bringing the second ring 20 and the second ring groove 2b into contact at the side surfaces to improve the side sealing performance. By improving the side sealing performance, for example, the intrusion of lubricating oil and unburned hydrocarbons into the combustion chamber is suppressed, so that a reduction in PN can be expected. In addition to the improvement in side sealing performance by the second ring 20, the synergistic effect of narrowing the joint gap S1 by the top ring 10 further reduces the intrusion of lubricating oil and unburned hydrocarbons into the combustion chamber. According to the piston ring combination 100 including the top ring 10 and the second ring 20, it is possible to more effectively suppress the generation of particulate matter. The twist angle can be controlled by appropriately changing the shape of the wire material, the forming conditions in the forming process of the piston ring, the polishing conditions in the side surface polishing process, and so on.

Here, "particulate matter derived from lubricating oil" includes, for example, "particulate matter generated by combustion of lubricating oil itself that has entered the combustion chamber" and "particulate matter generated by combustion of fuel dissolved in lubricating oil that has entered the combustion chamber." When fuel is dissolved in lubricating oil, PN tends to increase. "Particulate matter derived from fuel" includes, for example, "particulate matter generated when the fuel itself injected into the combustion chamber is combusted" and "particulate matter generated when fuel dissolved in lubricating oil volatilizes, enters the combustion chamber as unburned hydrocarbons, and is heated." Therefore, by improving the side sealing performance, for example, the intrusion of unburned hydrocarbons into the combustion chamber is suppressed, so that a reduction in PN generated by heating of unburned hydrocarbons that have entered the combustion chamber can be expected. "Particulate matter derived from lubricating oil" and "particulate matter derived from fuel" may include particulate matter generated by other mechanisms, and it is considered that the behavior of blow-by gas and the application of negative pressure are also related to the generation of particulate matter.

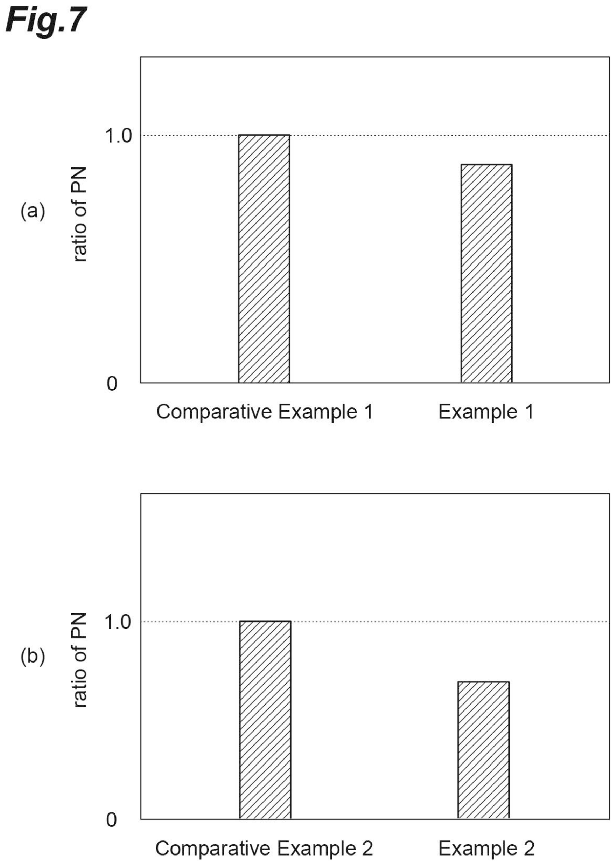

(a) of FIG. 7 is a graph illustrating the relationship between the specification of the top ring and the second ring and the ratio of PN. FIG. (b) of 7 is a graph illustrating the relationship between other specifications of the top ring and the second ring and the ratio of PN. In FIGS. (a) and (b) of 7, the ratio of PN for piston ring combinations including two specifications of top rings and second rings is shown, respectively. The PN that is the basis of the ratio in FIGS. (a) and (b) of 7 is the result of a fuel economy exhaust gas test in the WLTC mode (Worldwide harmonized Light vehicles Test Cycle). The test conditions for the fuel economy exhaust gas test used a water-cooled inline four-cylinder gasoline engine with direct in-cylinder fuel injection and a turbocharger as the internal combustion engine, and SAE 0W-20 engine oil as the lubricating oil. The specifications of the piston ring combination are a predetermined combination of the above-described top ring 10 (S1/d1: 0.0025), a conventional top ring with a larger joint gap than the top ring 10 (S1/d1: 0.0034), the above-described second ring 20 (the second ring according to the example shown by the solid line in FIG. 5), and a conventional second ring with twist angles of different signs at one and the other of the joint end portions (the second ring according to the comparative example shown by the dashed line in FIG. 5). Specifically, in FIG. (a) of 7, from the left, Comparative Example 1 corresponds to the conventional top ring and the conventional second ring, and Example 1 corresponds to the conventional top ring and the above-described second ring 20. In FIG. (b) of 7, from the left, Comparative Example 2 corresponds to the above-described top ring 10 and the conventional second ring, and Example 2 corresponds to the above-described top ring 10 and the above-described second ring 20.

As shown in FIG. (a) of 7, in Example 1, the side sealing performance is improved by the above-described second ring 20, and PN is reduced by 10% compared to Comparative Example 1. As shown in FIG. (b) of 7, in Example 2, the synergistic effect of the above-described top ring 10 and the above-described second ring 20 reduces PN by 30% compared to Comparative Example 2 and by 43% compared to Comparative Example 1.

Regarding the synergistic effect, specifically, suppressing the passage of lubricating oil and unburned hydrocarbons in both the top ring and the second ring is more effective overall in suppressing the intrusion of lubricating oil and unburned hydrocarbons into the combustion chamber than suppressing it in only one of the top ring or the second ring. For example, if only the narrowing of the joint gap of the top ring 10 is adopted, the side sealing performance may decrease in a certain circumferential section across a location where the twist angle of the second ring becomes 0'. Compared to the case where the improvement in side sealing performance of the second ring 20 is adopted, lubricating oil and unburned hydrocarbons are more likely to rise to a side of the top ring 10. Therefore, it is considered that not only the narrowing of the joint gap of the top ring 10 but also measures for the second ring are more likely to further suppress the intrusion of lubricating oil and unburned hydrocarbons into the combustion chamber. On the other hand, if only the improvement in side sealing performance of the second ring 20 is adopted, lubricating oil and unburned hydrocarbons passing between the second ring 20 and the second ring groove 2b are reduced. However, lubricating oil and unburned hydrocarbons existing between the top ring and the second ring 20 are more likely to enter the combustion chamber compared to the case where the narrowing of the joint gap of the top ring 10 is adopted. Therefore, it is considered that not only the improvement in side sealing performance of the second ring 20 but also measures for the top ring are more likely to further suppress the intrusion of lubricating oil and unburned hydrocarbons into the combustion chamber. By adopting the configuration of the present disclosure for both the top ring and the second ring, lubricating oil and unburned hydrocarbons passing between the second ring 20 and the second ring groove 2b are reduced, so that lubricating oil and unburned hydrocarbons existing between the top ring 10 and the second ring 20 are more effectively suppressed from entering the combustion chamber through the joint gap of the top ring 10. Due to such a synergistic effect, in Example 2 of FIG. (b) of 7, it is considered that a greater degree of improvement in PN is obtained than the degree of improvement in PN simply obtained by independently adding the effects of the top ring 10 and the second ring 20.

As described above, according to the second ring 20, the twist angle of the second ring 20 in a predetermined measurement state has a value with the same sign throughout from one of the joint end portions to the other along the circumferential direction of the second ring 20. As a result, a decrease in side sealing performance in a certain circumferential section across a location where the twist angle becomes 0' in the second ring 20 is suppressed. The side sealing performance can be improved throughout the entire circumference of the second ring 20. As a result, the intrusion of lubricating oil and unburned hydrocarbons into the combustion chamber is suppressed, making it possible to effectively suppress the generation of particulate matter.

According to the piston ring combination 100, the side sealing performance can be improved throughout the entire circumference of the second ring 20 by the above-described second ring 20. Furthermore, by narrowing the joint gap of the top ring 10, it is possible to suppress the intrusion of lubricating oil and unburned hydrocarbons existing between the top ring 10 and the second ring 20 into the combustion chamber through the joint gap of the top ring 10. As a result, not only are the lubricating oil and unburned hydrocarbons existing between the top ring 10 and the second ring 20 reduced, but also the lubricating oil and unburned hydrocarbons intruding into the combustion chamber through the joint gap of the top ring 10 are reduced. Due to such a synergistic effect, it becomes possible to more effectively suppress the generation of particulate matter.

[Modifications] Although the examples of the present disclosure have been described above, the present disclosure is not limited to the above-described embodiment. The present disclosure can be implemented in various forms with various modifications and improvements based on the knowledge of those skilled in the art, including the above-described examples.

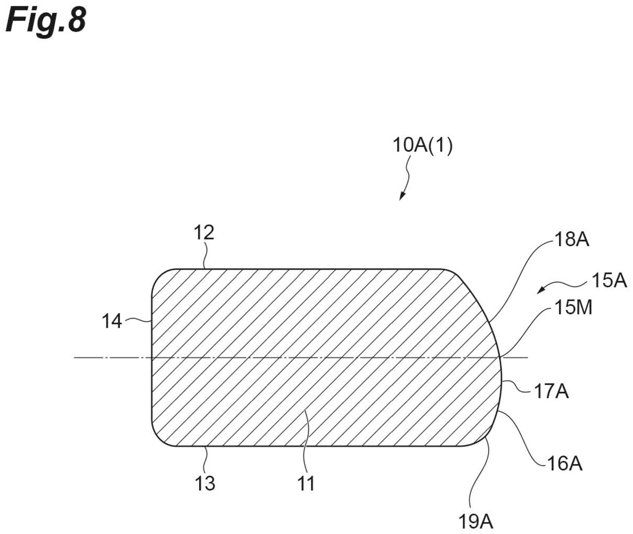

In the above embodiment, the top ring 10 had a symmetrical barrel shape that was symmetrical in the width direction with the vertex 17 as a boundary, but it may be an eccentric barrel shape. For example, FIG. 8 is a cross-sectional view of a top ring according to a modified example. On the outer peripheral surface 15A of the top ring 10A in FIG. 8, as an example, a curved surface 16A having a cross-sectional shape that curves convexly outward in the radial direction is provided. The curved surface 16A is, for example, a part of an arcuate surface whose center is located at the side of the bottom dead center of the center between the side surface 12 and the side surface 13 in the width direction. That is, the outer peripheral surface 15A of the top ring 10A protrudes outward in the radial direction, and the vertex 17A, which is the radially outermost point of the outer peripheral surface 15A of the top ring 10A, is disposed at the side of the bottom dead center of the central portion 15M of the outer peripheral surface 15A of the top ring 10A in the width direction (axial direction). The outer peripheral surface 15A of the top ring 10A is a barrel shape, and the curved surface (eccentric barrel shape) in which the radially outermost part (vertex 17A) of the top ring 10A is located below (closer to the crank chamber) the central portion 15M in the width direction of the outer peripheral surface 15A of the top ring 10A. The amount of drop of the curved surface 16A of the top ring 10A is defined in the same manner as the amount of drop of the curved surface 16 of the top ring 10. That is, the curved surface 16A of the top ring 10A is an arcuate surface passing through a first point 18A located at a distance of 0.5 mm or greater and 3.9 mm or less from the vertex 17A toward the side of the top dead center of the piston 3 and at a drop of 2 $\mu$m or greater and 50 $\mu$m or less on the radially inner side, and a second point 19A located at a distance of 0.15 mm or greater and 0.6 mm or less from the vertex 17A toward the side of the bottom dead center of the piston 3 and at a drop of 10 $\mu$m or less on the radially inner side.

In the above embodiment, a notch portion 29 was provided at the lower end of the taper surface 26 of the second ring 20, but the notch portion 29 may be omitted. For example, the radially inner end of the lower end drop portion 27 may be directly continuous with the radially outer end of the side surface 23 without passing through the notch portion 29.

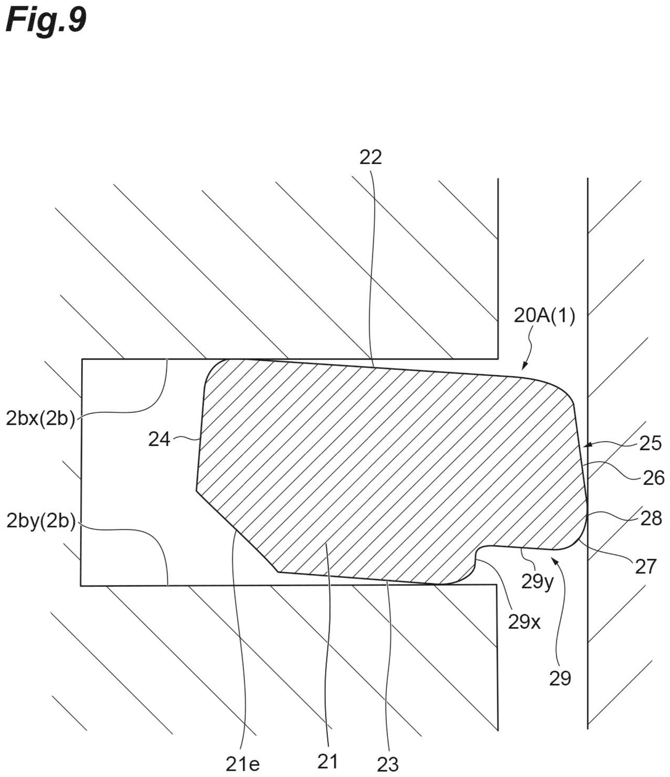

In the above embodiment, the twist angle of the second ring 20 was a positive twist angle throughout, but as in the example of FIG. 9, the twist angle of the second ring 20A may be a negative twist angle throughout. The second ring 20A shown in FIG. 9 includes a balance cut surface 21e that extends inclined with respect to the width direction so as to connect the side surface 23 and the inner peripheral surface 24. The balance cut surface 21e has a larger amount of cut (reduction in cross-sectional area) at the corner where the side surface 23 and the inner peripheral surface 24 virtually intersect in the cross section of the second ring 20A compared to the balance cut surface 21d of the second ring 20 shown in FIG. 4. With such a balance cut surface 21e, the second ring 20A is twisted in the opposite direction to the second ring 20 in cross-sectional view throughout. In this case, the twist angle of the second ring 20A may be equal to or greater than -50' and less than 0'. If it is less than -50', the side sealing performance deteriorates. The twist angle of the second ring 20A may be equal to or greater than -35' and less than 0'. The twist angle of the second ring 20A may be equal to or greater than -20' and less than 0'. The twist angle of the second ring 20A may be greater than -10' and less than 0'. The twist angle of the second ring 20A may be equal to or less than -5' at one or both of the 0° position and the 360° position of the second ring 20A. The twist angle of the second ring 20A may be greater than -10' and equal to or less than -1' at each of the 90° position, 180° position, and 270° position when the position opposite to the joint portion in the circumferential direction of the second ring 20A is defined as the 180° position, and may be greater than -10' and equal to or less than -5'. As an example, there is a negative twist second ring (negative twist second ring) in which the measurement angle position and the twist angle in the second ring are -9.0' at the 0° position, -6.6' at the 90° position, -4.3' at the 180° position, -1.9' at the 270° position, and -7.9' at the 360° position, and the twist angle is negative throughout. As Example 3, a combination of this negative twist second ring and a conventional top ring with a larger joint gap than the top ring 10 (S1/d1: 0.0034) was subjected to a fuel economy exhaust gas test in the WLTC mode (Worldwide harmonized Light vehicles Test Cycle) in the same manner as described above for FIGS. (a) and (b) of 7, and PN was reduced by 9% compared to Comparative Example 1. In addition, as Example 4, a combination of this negative twist second ring and the above-described top ring 10 (S1/d1: 0.0025) was subjected to the above fuel economy exhaust gas test, and PN was reduced by 40% compared to Comparative Example 1.

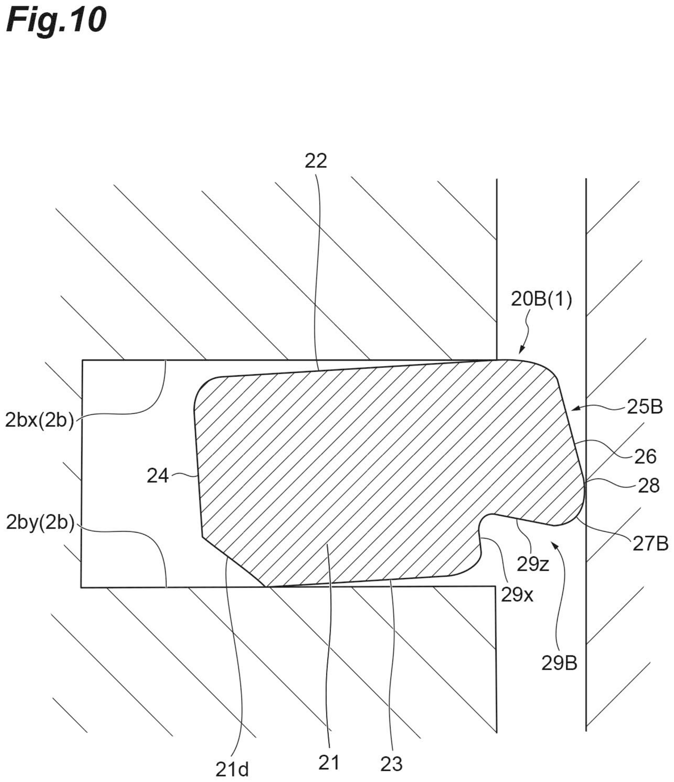

As another example, FIG. 10 is a cross-sectional view of a second ring according to another modified example. As shown in FIG. 10, in the outer peripheral surface 25B of the second ring 20B, the second surface 29z of the notch portion 29B is not parallel to the side surface 23 of the main body portion 21. The second surface 29z is inclined so as to approach the side surface 23 as it goes outward in the radial direction of the second ring 20B. The lower end drop portion 27B formed by the second surface 29z and the outer peripheral surface 25B is configured, for example, in the same manner as the lower end drop portion 27 of the second ring 20. The second ring 20B has a so-called balance Napier shape.

In the above embodiment, the second rings 20, 20A, and 20B had a balance cut surface, but the balance cut surface may be omitted.

In the above embodiment, as shown in FIG. 4, the side surface 22 of the second ring 20 contacted the upper side surface 2bx of the second ring groove 2b, and the side surface 23 of the second ring 20 contacted the lower side surface 2by of the second ring groove 2b, but the present disclosure is not limited to this example. That is, it is sufficient that at least one of the state in which the side surface 22 of the second ring 20 contacts the upper side surface 2bx of the second ring groove 2b and the state in which the side surface 23 of the second ring 20 contacts the lower side surface 2by of the second ring groove 2b occurs.

In the above embodiment, as in the example of FIG. 5, the twist angle of the second ring increases monotonically from the 0° position to the 180° position, decreases monotonically from the 180° position to the 360° position, and may have the maximum positive value at the 180° position. The twist angle of the second ring 20 had the maximum positive value at the 180° position, but the twist angle of the second ring may have various other increase and decrease tendencies. For example, the twist angle of the second ring may increase monotonically from the 0° position to the 360° position and have the maximum positive value at the 360° position. The twist angle of the second ring may decrease monotonically from the 0° position to the 360° position and have the maximum positive value at the 0° position. The twist angle of the second ring may increase monotonically from the 0° position to the 90° position, decrease monotonically from the 90° position to the 360° position, and have the maximum positive value at the 90° position. The twist angle of the second ring may decrease monotonically from the 0° position to the 270° position, increase monotonically from the 270° position to the 360° position, and have the minimum positive value at the 270° position. The twist angle of the second ring may have the maximum positive value at the 0° position and the 360° position.

Alternatively, the twist angle of the second ring may decrease monotonically from the 0° position to the 360° position and have the minimum negative value at the 360° position. The twist angle of the second ring may increase monotonically from the 0° position to the 360° position and have the minimum negative value at the 0° position. The twist angle of the second ring may decrease monotonically from the 0° position to the 90° position, increase monotonically from the 90° position to the 360° position, and have the minimum negative value at the 90° position. The twist angle of the second ring may increase monotonically from the 0° position to the 270° position, decrease monotonically from the 270° position to the 360° position, and have the maximum negative value at the 270° position. The twist angle of the second ring may have the minimum negative value at the 0° position and the 360° position.

In the above embodiment, the side surfaces 12 and 13 of the top ring 10 were substantially orthogonal to the inner peripheral surface 14, but the present disclosure is not limited to this example. The side surfaces 22 and 23 of the second ring 20 were substantially orthogonal to the inner peripheral surface 24, but the present disclosure is not limited to this example.

In the above embodiment, the second rings 20, 20A, and 20B were exemplified as piston rings in which the twist angle in a predetermined measurement state has a value with the same sign throughout from one of the joint end portions to the other along the circumferential direction, but the present disclosure is not limited to these examples. The piston ring in which the twist angle in a predetermined measurement state has a value with the same sign throughout from one of the joint end portions to the other along the circumferential direction may be a top ring, or may be both a top ring and a second ring. FIG. 1 shows a piston ring combination using three piston rings 1, but the present disclosure is not limited to this, and the piston ring combination may use four or more piston rings. That is, the piston ring in which the twist angle in a predetermined measurement state has a value with the same sign throughout from one of the joint end portions to the other along the circumferential direction may be a third ring in the case of using four or more piston rings, or may be both a second ring and a third ring.

In the above embodiment, the internal combustion engine was, for example, a gasoline engine with direct in-cylinder fuel injection mounted on an automobile, but the present disclosure is not limited to this example. The internal combustion engine may be any reciprocating internal combustion engine using a piston on which a piston ring is installed, and may be a diesel engine.

The following describes the constituent requirements of various aspects of the present disclosure.

(Invention 1)

A piston ring to be installed on a piston of an internal combustion engine, comprising:

an inner peripheral surface;
an outer peripheral surface;
a main body portion including one side surface and another side surface intersecting the inner peripheral surface; and
a joint portion formed by a pair of joint end portions facing each other,
wherein, in a predetermined measurement state, a twist angle of the piston ring has a value with a same sign throughout from one of the joint end portions to the other of the joint end portions along a circumferential direction of the piston ring.

(Invention 2)

The piston ring according to Invention 1, wherein the twist angle is equal to or greater than -50' and less than 0', or the twist angle is greater than 0' and equal to or less than 50'.

(Invention 3)

The piston ring according to Invention 1 or 2,

wherein the outer peripheral surface includes a taper surface having a cross-sectional shape that protrudes radially outward as it extends toward a bottom dead center of the piston, and
wherein the piston ring comprises, at a side of the bottom dead center,

a first notch portion provided between the another side surface of the piston ring and the taper surface, and
a second notch portion provided between the another side surface of the piston ring and the inner peripheral surface of the piston ring.

(Invention 4)

The piston ring according to any one of Inventions 1 to 3,
wherein the piston ring is a second ring.

(Invention 5)

A piston ring combination comprising:

the second ring that is the piston ring according to Invention 4; and
a top ring to be installed on the piston,

wherein the top ring comprises:
a main body portion including:

an inner peripheral surface;
an outer peripheral surface; and
one side surface and another side surface intersecting the inner peripheral surface, and
a joint portion,

wherein the main body portion of the top ring forms an annular shape having a predetermined nominal diameter as a diameter, and
wherein a ratio S1/d1 of a joint gap S1 of the joint portion of the top ring to the nominal diameter d1 is 0.003 or less.

Reference Signs List

1: Piston ring; 3: Piston; 10, 10A: Top ring (piston ring); 20, 20A, 20B: Second ring (piston ring); 11, 21: Main body portion; 11a, 21a: Joint portion; 11b, 11c, 21b, 21c: Joint end portion; 12, 22: Side surface (one side surface); 13, 23: Side surface (another side surface); 14, 24: Inner peripheral surface; 15, 15A, 25, 25B: Outer peripheral surface; 15M: Central portion; 16, 16A: Curved surface; 17, 17A, 28: Vertex; 18, 18A: First point; 19, 19A: Second point; 21d: Balance cut surface (second notch portion); 26: Taper surface; 29, 29B: Notch portion (first notch portion); 100: Piston ring combination.

**Claims**

1.   A piston ring to be installed on a piston of an internal combustion engine, comprising:

an inner peripheral surface;
an outer peripheral surface;
a main body portion including one side surface and another side surface intersecting the inner peripheral surface; and
a joint portion formed by a pair of joint end portions facing each other,
wherein, in a predetermined measurement state, a twist angle of the piston ring has a value with a same sign throughout from one of the joint end portions to the other of the joint end portions along a circumferential direction of the piston ring.

2.   The piston ring according to claim 1, wherein the twist angle is equal to or greater than - 50' and less than 0', or the twist angle is greater than 0' and equal to or less than 50'.

3.   The piston ring according to claim 1 or 2,

wherein the outer peripheral surface includes a taper surface having a cross-sectional shape that protrudes radially outward as it extends toward a bottom dead center of the piston, and wherein the piston ring comprises, at a side of the bottom dead center,

a first notch portion provided between the another side surface of the piston ring and the taper surface, and
a second notch portion provided between the another side surface of the piston ring and the inner peripheral surface of the piston ring.

4.   The piston ring according to claim 1 or 2, wherein the piston ring is a second ring.

5.   A piston ring combination comprising:

the second ring that is the piston ring according to claim 4; and
a top ring to be installed on the piston, wherein the top ring comprises:

a main body portion including:

an inner peripheral surface;
an outer peripheral surface; and
one side surface and another side surface intersecting the inner peripheral surface, and

a joint portion,

wherein the main body portion of the top ring forms an annular shape having a predetermined nominal diameter as a diameter, and
wherein a ratio S1/d1 of a joint gap S1 of the joint portion of the top ring to the nominal diameter d1 is 0.003 or less.

# *Fig.1*

100

3　　　3a

2a(2)　　　　　　　　　　　　　10(1)

2b(2)　　　　　　　　　　　　　20(1)

2c(2)

31

30(1)

32

33　　　　　　　　4

# Fig.2

(a)

(b)

# *Fig.3*

(a)

(b)

*Fig.4*

# Fig.5

EP 4 653 688 A1

**Fig.6**

18

*Fig.7*

(a)

(b)

Fig.8

# Fig.9

*Fig.10*

## INTERNATIONAL SEARCH REPORT

| International application No. |
|---|
| **PCT/JP2023/003054** |

| A. | CLASSIFICATION OF SUBJECT MATTER |
|---|---|

**F02F 5/00**(2006.01)i; **F16J 9/20**(2006.01)i
FI:   F02F5/00 K; F16J9/20

According to International Patent Classification (IPC) or to both national classification and IPC

| B. | FIELDS SEARCHED |
|---|---|

Minimum documentation searched (classification system followed by classification symbols)

    F02F5/00; F16J9/00-9/28

Documentation searched other than minimum documentation to the extent that such documents are included in the fields searched

    Published examined utility model applications of Japan 1922-1996
    Published unexamined utility model applications of Japan 1971-2023
    Registered utility model specifications of Japan 1996-2023
    Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | JP 6-173757 A (RIKEN CORP.) 21 June 1994 (1994-06-21) paragraphs [0008]-[0014], fig. 3-6 | 1-2 |
| Y | | 3-5 |
| X | JP 2000-9225 A (RIKEN CORP.) 11 January 2000 (2000-01-11) paragraphs [0009]-[0012], fig. 1-4 | 1, 4 |
| Y | | 3, 5 |
| Y | JP 2019-190513 A (RIKEN CORP.) 31 October 2019 (2019-10-31) paragraphs [0026]-[0052], [0087]-[0097], fig. 2-5 | 3-5 |
| Y | JP 2021-1612 A (TPR CO., LTD.) 07 January 2021 (2021-01-07) paragraphs [0035]-[0048], [0059], fig. 2, 4 | 3-4 |
| A | JP 2006-521505 A (FEDERAL-MOGUL BURSCHEID GMBH) 21 September 2006 (2006-09-21) entire text | 1-5 |

| ✓ Further documents are listed in the continuation of Box C. | ✓ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **11 April 2023** | **25 April 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**

International application No.

**PCT/JP2023/003054**

**C. DOCUMENTS CONSIDERED TO BE RELEVANT**

| Category* | Citation of document, with indication, where appropriate, of the relevant passages | Relevant to claim No. |
|---|---|---|
| A | JP 7-158736 A (SUZUKI KABUSHIKI KAISHA) 20 June 1995 (1995-06-20) entire text | 1-5 |
| A | CN 214577421 U (ANQING TP GOETZE PISTON RING CO., LTD.) 02 November 2021 (2021-11-02) entire text | 1-5 |
| A | Microfilm of the specification and drawings annexed to the request of Japanese Utility Model Application No. 101215/1986 (Laid-open No. 6270/1988) (NIPPON PISTON RING CO., LTD.) 16 January 1988 (1988-01-16), entire text | 1-5 |

Form PCT/ISA/210 (second sheet) (January 2015)

## INTERNATIONAL SEARCH REPORT
### Information on patent family members

International application No.

**PCT/JP2023/003054**

| Patent document cited in search report | | | Publication date (day/month/year) | Patent family member(s) | Publication date (day/month/year) |
|---|---|---|---|---|---|
| JP | 6-173757 | A | 21 June 1994 | (Family: none) | |
| JP | 2000-9225 | A | 11 January 2000 | (Family: none) | |
| JP | 2019-190513 | A | 31 October 2019 | WO 2019/203358 A1 paragraphs [0026]-[0052], [0087]-[0097], fig. 2-5 | |
| JP | 2021-1612 | A | 07 January 2021 | (Family: none) | |
| JP | 2006-521505 | A | 21 September 2006 | US 2006/0255546 A1 entire text WO 2004/088179 A1 DE 10314034 A1 PT 1608899 E | |
| JP | 7-158736 | A | 20 June 1995 | (Family: none) | |
| CN | 214577421 | U | 02 November 2021 | (Family: none) | |
| JP | 63-6270 | U1 | 16 January 1988 | (Family: none) | |

Form PCT/ISA/210 (patent family annex) (January 2015)

# EP 4 653 688 A1

**Patent documents cited in the description**

- JP 2020204287 A